# EUROPEAN PATENT APPLICATION

(11) **EP 4 553 006 A1**
(43) Date of publication of application: **14.05.2025**
(21) Application number: 23209258.5
(22) Date of filing: 10.11.2023
(51) Int. Cl.: B65G 1/04

(54) **A CONTAINER HANDLING VEHICLE**

(71) Applicant: AUTOSTORE TECHNOLOGY AS, 5578 Nedre Vats (NO)
(72) Inventor:
(74) Representative: Jarrett, Daniel Phillip

(57) **Abstract**

A container handling vehicle for operating on a rail system of a storage and retrieval system comprises:
a vehicle body;
at first set of wheels connected to the vehicle body, the first set of wheels being configured for driving the container handling vehicle in a first direction (X) on top of the rail system, the first set of wheels comprising a first wheel (504) and a second wheel (502);
a second set of wheels connected to the vehicle body, the second set of wheels being configured for driving the container handling vehicle in a second direction (Y) on top of the rail system, the second set of wheels comprising a third wheel (503) and a fourth wheel; and
a cantilever extending horizontally forward in the first direction (X) from the vehicle body;
wherein the third wheel (503) and the forth wheel are arranged on a first side of the vehicle body, the first side being the side of the vehicle body from which the cantilever extends, and are rotatable around two parallel and horizontally offset wheel axes (WAY), and wherein a vertical plane (602) defined by the second set of wheels is a vertical plane in which external faces of the third wheel (503) and the fourth wheel lie,
wherein the first wheel (504) and the second wheel (502) are arranged on second and third sides of the vehicle body, the second and third sides being opposite sides of the vehicle body, each perpendicular to the first side, and wherein the first wheel (504) and the second wheel (502) are rotatable around a common wheel axis (WAX) positioned further forward in the first direction (X) than the vertical plane defined by the second set of wheels.

## Description

### FIELD OF THE INVENTION

The present invention relates to an automated storage and retrieval system for storage and retrieval of containers, in particular to a container handling vehicle with a cantilever part where a first set of wheels is mounted to brackets extending out from the body of the container handling vehicle.

### BACKGROUND AND PRIOR ART

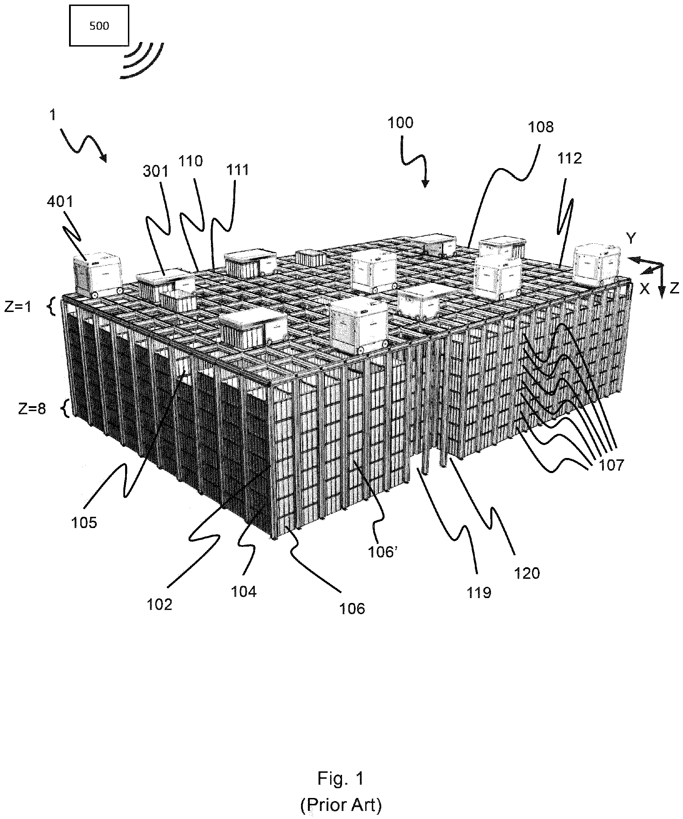

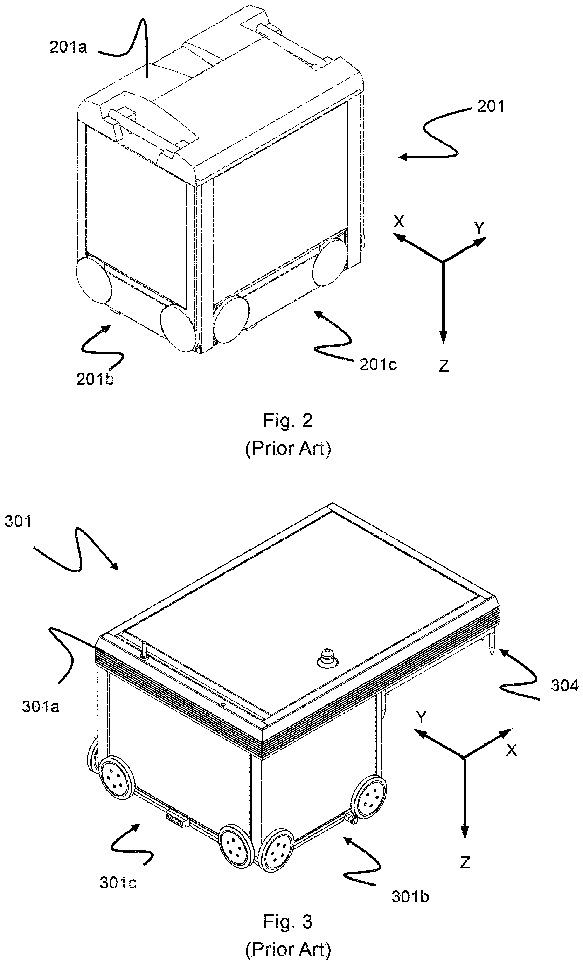

Fig. 1 discloses a prior art automated storage and retrieval system 1 with a framework structure 100 and Figs. 2, 3 and 4 disclose three different prior art container handling vehicles 201,301,401 suitable for operating on such a system 1.

The framework structure 100 comprises upright members 102 and a storage volume comprising storage columns 105 arranged in rows between the upright members 102. In these storage columns 105 storage containers 106, also known as bins, are stacked one on top of one another to form stacks 107. The members 102 may typically be made of metal, e.g. extruded aluminum profiles.

The framework structure 100 of the automated storage and retrieval system 1 comprises a rail system 108 arranged across the top of framework structure 100, on which rail system 108 a plurality of container handling vehicles 201,301,401 may be operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 201,301,401 in a first direction *X* across the top of the frame structure 100, and a second set of parallel rails 111 arranged perpendicular to the first set of rails 110 to guide movement of the container handling vehicles 201,301,401 in a second direction Y which is perpendicular to the first direction X. Containers 106 stored in the columns 105 are accessed by the container handling vehicles 201,301,401 through access openings 112 in the rail system 108. The container handling vehicles 201,301,401 can move laterally above the storage columns 105, i.e. in a plane which is parallel to the horizontal *X-Y* plane.

The upright members 102 of the framework structure 100 may be used to guide the storage containers during raising of the containers out from and lowering of the containers into the columns 105. The stacks 107 of containers 106 are typically self-supporting.

Each prior art container handling vehicle 201,301,401 comprises a vehicle body 201a,301a,401a and first and second sets of wheels 201b, 201c, 301b, 301c,401b,401c which enable the lateral movement of the container handling vehicles 201,301,401 in the *X* direction and in the *Y* direction, respectively. In Figs. 2, 3 and 4 two wheels in each set are fully visible. The first set of wheels 201b,301b,401b is arranged to engage with two adjacent rails of the first set 110 of rails, and the second set of wheels 201c,301c,401c is arranged to engage with two adjacent rails of the second set 111 of rails. At least one of the sets of wheels 201b, 201c, 301b,301c,401b,401c can be lifted and lowered, so that the first set of wheels 201b,301b,401b and/or the second set of wheels 201c,301c,401c can be engaged with the respective set of rails 110, 111 at any one time.

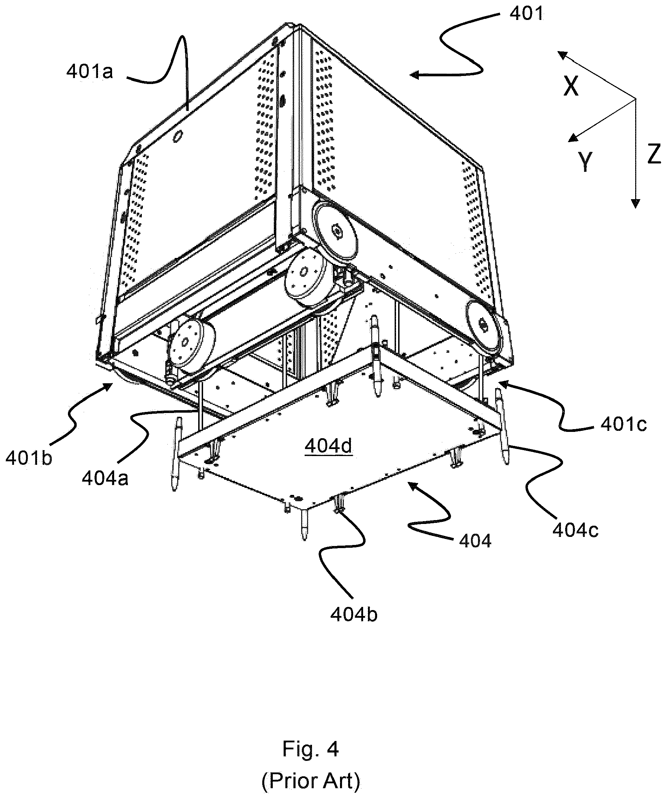

Each prior art container handling vehicle 201,301,401 also comprises a lifting device for vertical transportation of storage containers 106, e.g. raising a storage container 106 from, and lowering a storage container 106 into, a storage column 105. The lifting device comprises one or more gripping / engaging devices which are adapted to engage a storage container 106, and which gripping / engaging devices can be lowered from the vehicle 201,301,401 so that the position of the gripping / engaging devices with respect to the vehicle 201,301,401 can be adjusted in a third direction *Z* which is orthogonal the first direction *X* and the second direction *Y.* Parts of the gripping device of the container handling vehicles 301,401 are shown in Figs. 3 and 4 indicated with reference number 304,404. The gripping device of the container handling device 201 is located within the vehicle body 201a in Fig. 2 and is thus not shown.

Conventionally, and also for the purpose of this application, *Z*=1 identifies the uppermost layer available for storage containers below the rails 110,111, i.e. the layer immediately below the rail system 108, *Z*=2 the second layer below the rail system 108, *Z*=3 the third layer etc. In the exemplary prior art disclosed in Fig. 1, *Z*=8 identifies the lowermost, bottom layer of storage containers. Similarly, *X*=1...*n* and *Y*=1...*n* identifies the position of each storage column 105 in the horizontal plane. Consequently, as an example, and using the Cartesian coordinate system *X, Y, Z* indicated in Fig. 1, the storage container identified as 106' in Fig. 1 can be said to occupy storage position *X*=17, *Y*=1*, Z*=6. The container handling vehicles 201,301,401 can be said to travel in layer *Z*=0, and each storage column 105 can be identified by its *X* and *Y* coordinates. Thus, the storage containers shown in Fig. 1 extending above the rail system 108 are also said to be arranged in layer *Z*=0.

The storage volume of the framework structure 100 has often been referred to as a grid 104, where the possible storage positions within this grid are referred to as storage cells. Each storage column may be identified by a position in an *X*- and *Y*-direction, while each storage cell may be identified by a container number in the *X-, Y-* and *Z*-direction.

Each prior art container handling vehicle 201,301,401 comprises a storage compartment or space for receiving and stowing a storage container 106 when transporting the storage container 106 across the rail system 108. The storage space may comprise a cavity arranged internally within the vehicle body 201a,401a as shown in Figs. 2 and 4 and as described in e.g. WO2O15/193278A1 and WO2019/206487A1, the contents of which are incorporated herein by reference.

Fig. 3 shows an alternative configuration of a container handling vehicle 301 with a cantilever construction. Such a vehicle is described in detail in e.g. NO317366, the contents of which are also incorporated herein by reference.

The cavity container handling vehicle 201 shown in Fig. 2 may have a footprint that covers an area with dimensions in the X and Y directions which is generally equal to the lateral extent of a storage column 105, e.g. as is described in WO2O15/193278A1, the contents of which are incorporated herein by reference. The term `lateral' used herein may mean 'horizontal'.

Alternatively, the cavity container handling vehicles 401 may have a footprint which is larger than the lateral area defined by a storage column 105 as shown in Fig. 1 and 4, e.g. as is disclosed in WO2014/090684A1 or WO2019/206487A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail 110,111 may comprise two parallel tracks. In other rail systems 108, each rail in one direction (e.g. an X direction) may comprise one track and each rail in the other, perpendicular direction (e.g. a Y direction) may comprise two tracks. Each rail 110,111 may also comprise two track members that are fastened together, each track member providing one of a pair of tracks provided by each rail.

WO2018/146304A1, the contents of which are incorporated herein by reference, illustrates a typical configuration of rail system 108 comprising rails and parallel tracks in both *X* and *Y* directions.

In the framework structure 100, a majority of the columns 105 are storage columns 105, i.e. columns 105 where storage containers 106 are stored in stacks 107. However, some columns 105 may have other purposes. In Fig. 1, columns 119 and 120 are such special-purpose columns used by the container handling vehicles 201,301,401 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a `port column' 119,120. The transportation to the access station may be in any direction, that is horizontal, tilted and/or vertical. For example, the storage containers 106 may be placed in a random or dedicated column 105 within the framework structure 100, then picked up by any container handling vehicle and transported to a port column 119,120 for further transportation to an access station. The transportation from the port to the access station may require movement along various different directions, by means such as delivery vehicles, trolleys or other transportation lines. Note that the term 'tilted' means transportation of storage containers 106 having a general transportation orientation somewhere between horizontal and vertical.

In Fig. 1, the first port column 119 may for example be a dedicated drop-off port column where the container handling vehicles 201,301,401 can drop off storage containers 106 to be transported to an access or a transfer station, and the second port column 120 may be a dedicated pick-up port column where the container handling vehicles 201,301,401 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are returned into the framework structure 100 again once accessed. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station.

The conveyor system may be arranged to transfer storage containers 106 between different framework structures, e.g. as is described in WO2014/075937A1, the contents of which are incorporated herein by reference.

When a storage container 106 stored in one of the columns 105 disclosed in Fig. 1 is to be accessed, one of the container handling vehicles 201,301,401 is instructed to retrieve the target storage container 106 from its position and transport it to the drop-off port column 119. This operation involves moving the container handling vehicle 201,301,401 to a location above the storage column 105 in which the target storage container 106 is positioned, retrieving the storage container 106 from the storage column 105 using the container handling vehicle's 201,301,401 lifting device (not shown), and transporting the storage container 106 to the drop-off port column 119. If the target storage container 106 is located deep within a stack 107, i.e. with one or a plurality of other storage containers 106 positioned above the target storage container 106, the operation also involves temporarily moving the abovepositioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201,301,401 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201,301,401 is instructed to pick up the storage container 106 from the pick-up port column 120 and transport it to a location above the storage column 105 where it is to be stored. After any storage containers 106 positioned at or above the target position within the stack 107 have been removed, the container handling vehicle 201,301,401 positions the storage container 106 at the desired position. The removed storage containers 106 may then be lowered back into the storage column 105 or relocated to other storage columns 105.

For monitoring and controlling the automated storage and retrieval system 1, e.g. monitoring and controlling the location of respective storage containers 106 within the framework structure 100, the content of each storage container 106, and the movement of the container handling vehicles 201,301,401 so that a desired storage container 106 can be delivered to the desired location at the desired time without the container handling vehicles 201,301,401 colliding with each other, the automated storage and retrieval system 1 comprises a control system 500 which typically is computerized and which typically comprises a database for keeping track of the storage containers 106.

EP4178884 (A1) describes a container handling vehicle with a cantilever solution operating on an automated storage and retrieval system. The container handling vehicle has two sets of wheels for going in a first X-direction and two sets of wheels for going in a second Y direction. In this solution the wheels closest to the cantilever part of the container handling vehicle for traveling in the first X-direction can be extended in order to ensure stability. However, this solution does not involve a permanent extension of the wheels. It is intended to give a slightly better stability of the vehicle when it is carrying a container. When the container handling vehicle does not carry a container, the wheels can be retracted. These wheels drive the container handling vehicle in the first X-direction. The extension of these wheels involves an intricate solution for being able to still have the driving force in both extended and retracted position.

EP3713855 (A1) describe a solution where a container handling vehicle operating on a storage and retrieval system. The container handing vehicle is comprised of a base to which the body of the container handling vehicle is attached. The body of the container handling vehicle can swivel around on the base making it able to face in any direction. The container handling vehicle in this solution also has a cantilever part. Further the base has wheels for traveling in both a first X-direction and a second Y-direction. One of the set of wheels for traveling in the X - direction is attached to an extension of the base.

### SUMMARY OF THE INVENTION

The present invention is set forth and characterized in the independent claims, while the dependent claims describe other characteristics of the invention.

In one aspect, the invention is related to a container handling vehicle for operating on a rail system of a storage and retrieval system, wherein the container handling vehicle comprises: a vehicle body; at first set of wheels connected to the vehicle body, the first set of wheels being configured for driving the container handling vehicle in a first direction (X) on top of the rail system, the first set of wheels comprising a first wheel and a second wheel; a second set of wheels connected to the vehicle body, the second set of wheels being configured for driving the container handling vehicle in a second direction (Y) on top of the rail system, the second set of wheels comprising a third wheel and a fourth wheel; a cantilever extending horizontally forward in the first direction (X) from the vehicle body; and a container lifting device arranged below the cantilever, wherein the third wheel and the forth wheel are arranged on a first side of the vehicle body, the first side being the side of the vehicle body from which the cantilever extends, and are rotatable around two parallel and horizontally offset wheel axes (WAY), and wherein a vertical plane defined by the second set of wheels is a vertical plane in which external faces of the third wheel and the forth wheel lie,

the first wheel and the second wheel are arranged on second and third sides of the vehicle body, the second and third sides being opposite sides of the vehicle body, each perpendicular to the first side, and wherein the first wheel and the second wheel are rotatable around a common wheel axis (WAX);

The container handling vehicle comprises a first bracket, extending from the vehicle body in the first direction (X), for supporting the first wheel, and a second bracket, extending from the vehicle body in the first direction (X), for supporting the second wheel, and wherein the first and second brackets are configured to position the first and second wheels such that the mutual wheel axis (WAX) is positioned further forward in the first direction (X) than the vertical plane defined by the second set of wheels.

The first and second brackets are arranged within a footprint of the cantilever, defined by a vertical projection of the cantilever comprising a first sheave for driving the first wheel and a second sheave for driving the second wheel, wherein the first sheave and the second sheave are rotatable around a common sheave axis (PAX), the wheel axis (WAX) and the sheave axis (PAX) are arranged parallel and offset relative to each other. The first sheave is configured to drive a first toothed wheel which is configured to drive the first wheel, and the second sheave is configured to drive a second toothed wheel which is configured to drive the second wheel.

The first wheel comprises a toothed inner circumferential surface for engaging with the first toothed wheel and the second wheel comprises a toothed inner circumferential surface for engaging with the second toothed wheel.

The container handling vehicle comprises:
- a first wheel motor and a first drive belt, wherein the first drive belt is configured to transfer drive from the first wheel motor to the first sheave, and
- a second wheel motor and a second drive belt, wherein the second drive belt is configured transfer drive from the second wheel motor to the second sheave wherein the first and second wheel motors have a common motor rotational axis (MAX), and wherein the motor rotational axis (MAX) is arranged parallel and offset relative to the wheel axis (WAX) and the sheave axis (PAX), the motor rotational axis (MAX) is arranged inside the vehicle body, the first wheel is attached to a first sheave and the second wheel is attached to a second sheave, and the first wheel and the second wheel and the first sheave and the second sheave all have the same common axis (WAX, PAX), the container handling vehicle comprises:
- a first wheel motor and a first drive belt, wherein the first drive belt is configured to transfer drive from the first wheel motor to the first sheave, and
- a second wheel motor and a second drive belt, wherein the second drive belt is configured to transfer drive from the second wheel motor to the second sheave.

The container handling vehicle operates on a storage and retrieval system comprising a rail system being part of a framework structure where the rail system comprises a first set of parallel rails arranged to guide movement of container handling vehicles in a first direction (X) across the top of the framework structure, and a second set of parallel rails arranged perpendicular to the first set of rails to guide movement of the container handling vehicle in a second direction (Y) which is perpendicular to the first direction (X), the first and second sets of parallel rails dividing the rail system into a plurality of grid cells, the framework structure comprising upright members that define storage columns for storing containers within the framework structure.

The combined width (WW) of the first wheel and the first sheave is equal to or smaller than half the width of a rail (WR) of the rail system, the combined width (WW) of the second wheel and the second sheave is equal to or smaller than half the width of a rail (WR) of the rail system, each of the first and the second wheels comprises a wheel rim and a tyre arranged or moulded on the wheel rim, the wheel rim and the sheave are portions of a single integral part, the single wheel component is mounted on a wheel hub of the container handling vehicle via a pair of bearing rings.

This solution gives the container handling vehicle stability both while carrying a container and not.

### BRIEF DESCRIPTION OF THE DRAWINGS

Following drawings are appended to facilitate the understanding of the invention. The drawings show embodiments of the invention, which will now be described by way of example only, where:
Fig. 1 is a perspective view of a framework structure of a prior art automated storage and retrieval system.
Fig. 2 is a perspective view of a prior art container handling vehicle having an internally arranged cavity for carrying storage containers therein.
Fig. 3 is a perspective view of a prior art container handling vehicle having a cantilever for carrying storage containers underneath.
Fig. 4 is a perspective view, seen from below, of a prior art container handling vehicle having an internally arranged cavity for carrying storage containers therein.
Fig. 5 is a side view of a container handling vehicle with the front wheels in the first X-direction extended beyond the body of the container handling vehicle.
Fig. 6 is a perspective view of a container handling vehicle with a cantilever part.
Fig. 7a is a detailed perspective view of components of the container handling vehicle of Fig. 5 where superfluous covers have been omitted on purpose to better illustrate wheel, gear wheel, drive belt, bracket, wheel motor etc.;
Fig. 7b is an enlarged view of section A in Fig. 7a
Fig. 7c is a detailed view of Fig. 7b where a bracket to which a gear wheel and wheel are connected has been removed to better illustrate an engagement between the gear wheel and the wheel;
Fig 8a is a front view of a wheel for traveling in the first X-direction wherein the wheel is narrower than the track in order to make room for the drive mechanism on the inner side of the wheel without it being in the way for the lifting mechanism.
Fig. 8b is a perspective side view of the wheel in the fig. 8a.
Fig. 8c is an exploded view of the wheel according to fig. 8a and 8b.

### DETAILED DESCRIPTION OF THE INVENTION

In overview a container handling vehicle for operating on a rail system of a storage and retrieval system includes a first set of wheels for driving the container handling vehicle in a first direction (X) on top of the rail system. A second set of wheels for driving the container handling vehicle in a second direction (Y) on top of the rail system define a vertical plane (602) in which external faces of the second set of wheels lie. A cantilever extends horizontally forward in the first direction (X) from the vehicle body and the first set of wheels are rotatable around a common wheel axis (WAX) positioned further forward in the first direction (X) than the vertical plane defined by the second set of wheels.

As a result, permanent stability is provided to a container handling vehicle with a cantilever solution by having the driving wheels in the first X-direction on a permanent extension.

In the following, embodiments of the invention will be discussed in more detail with reference to the appended drawings. It should be understood, however, that the drawings are not intended to limit the invention to the subject-matter depicted in the drawings.

The framework structure 100 of the automated storage and retrieval system 1 is constructed in a similar manner to the prior art framework structure 100 described above in connection with Figs. 1-3. That is, the framework structure 100 comprises a number of upright members 102, and comprises a first, upper rail system 108 extending in the X direction and Y direction.

The framework structure 100 further comprises storage compartments in the form of storage columns 105 provided between the members 102 wherein storage containers 106 are stackable in stacks 107 within the storage columns 105.

The framework structure 100 can be of any size. In particular it is understood that the framework structure can be considerably wider and/or longer and/or deeper than disclosed in Fig. 1. For example, the framework structure 100 may have a horizontal extent of more than 700×700 columns and a storage depth of more than twelve containers.

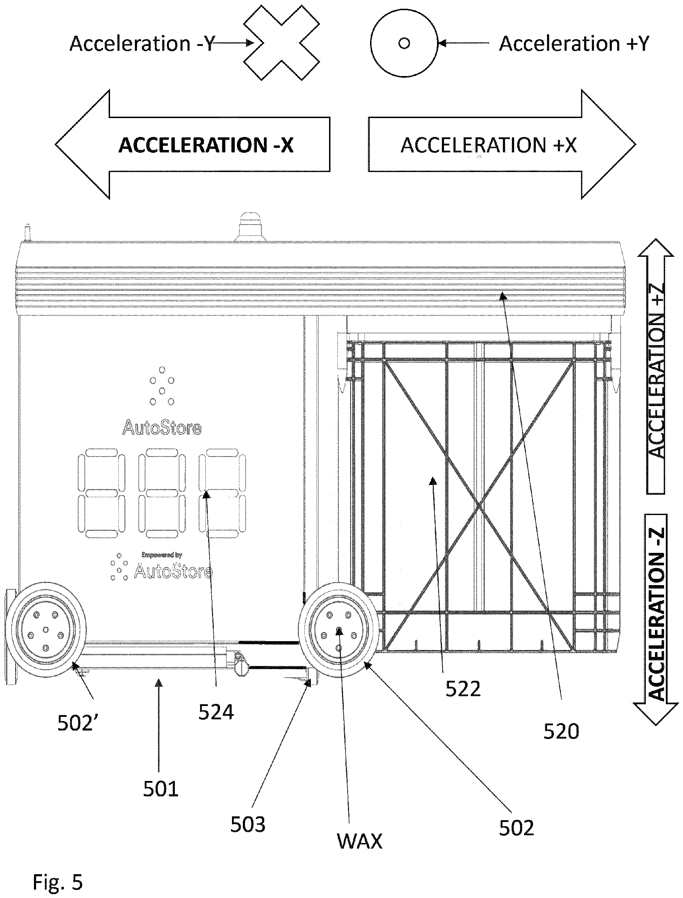

One embodiment of the automated storage and retrieval system according to the invention will now be discussed in more detail with reference to Figs 5 - 8c.

Fig. 5 is a side view of a container handling vehicle with the front wheels in the first X-direction extended beyond the body of the container handling vehicle. Here it can be seen a container handing vehicle with a cantilever part 520 protruding out in a first X-direction. The front set of wheels 502 for traveling in the first X-direction is protruding outside the body of the container handling vehicle. The set of wheels is placed protruding forward underneath the cantilever part of the container handling vehicle. The first set of wheels is protruding on the outside of the space where the container is situated when lifted all the way to the top by a lifting platform on the container handling vehicle.

The container handling vehicle 501 features a vehicle body 524. A first set of wheels 502, 502' and a second set of wheels are connected to the vehicle body. The first set of wheels is configured for driving the container handling vehicle 501 in a first direction X on top of a rail system 108.

The container handling vehicle 501 comprises a cantilever portion 520 and a lifting device 522 comprising a lifting frame for lifting storage containers 106. The lifting frame is suspended from the cantilever portion, as will be well known to the skilled reader.

The lifting device comprises one or more grippers which are adapted to engage a storage container 106. The lifting frame and grippers can be lowered from the cantilever portion of the vehicle 501 so that the position of the grippers with respect to the vehicle 501 can be adjusted in a third direction Z which is orthogonal to the first direction X and the second direction Y. The grippers preferably engage the storage containers 106 from above.

Preferably guide pins or guide members assist in aligning the grippers relative gripping recesses (not shown) of the storage container 106 as well as in aligning the lifting frame relative upright members 102 of the frame structure 100 (see Fig. 1).

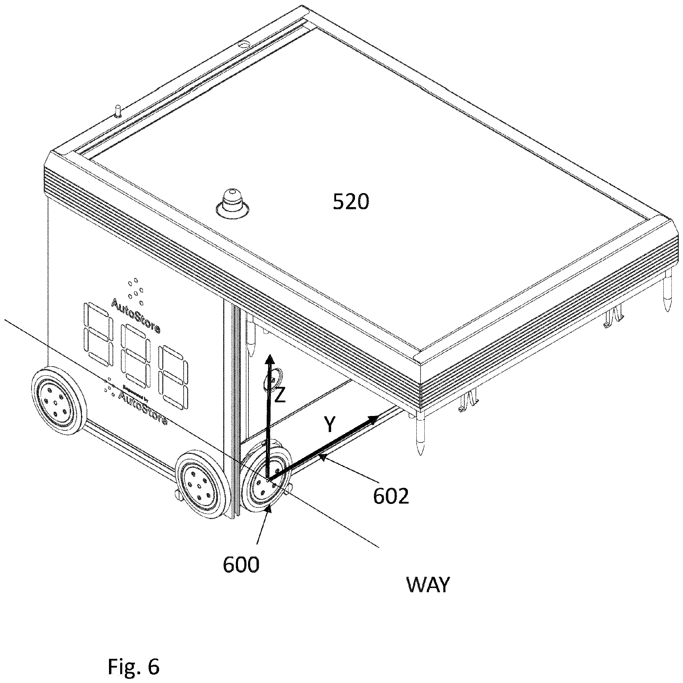

Fig. 6 is a perspective view of a container handling vehicle with a cantilever part 520 illustrating the wheel axis of the third wheel 600 WAY, for transporting the container handling vehicle in the second Y-direction WAY. Additionally the vertical YZ plane define by the outer faces of the Y-direction wheels is shown at 602 at the point of intersection with WAY.

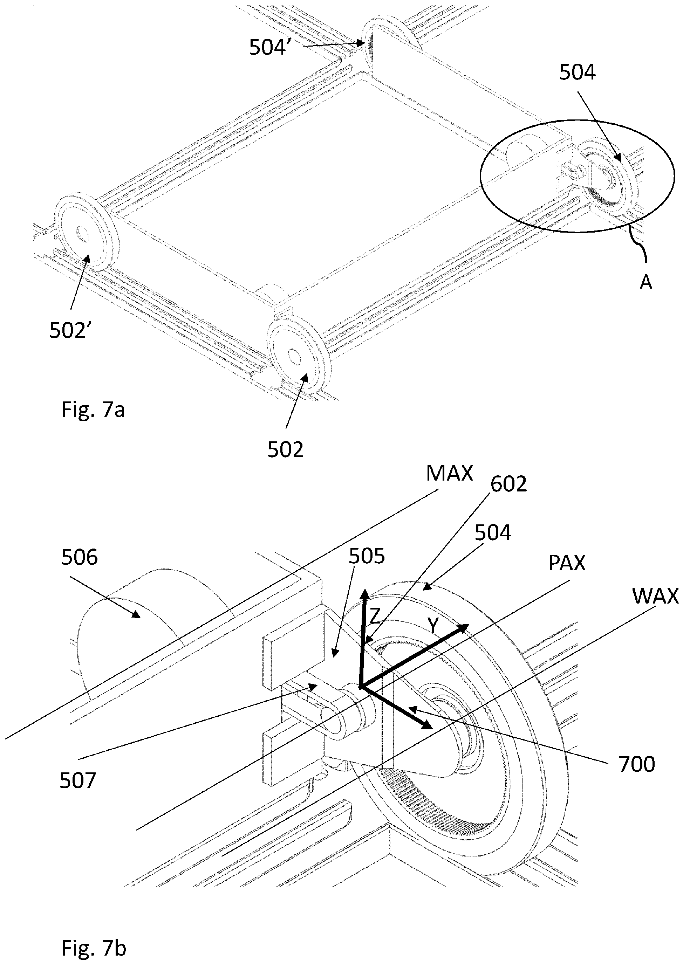

Fig. 7a-7c illustrates a first solution to a drive mechanism for the front wheels in the X-direction.

Figs. 7a- 7c are detailed front perspective views of components of the container handling vehicle 501 where superfluous covers have been omitted to better illustrate wheel 502, 504, gear wheel 510, drive belt 507, bracket 505 and wheel motor 506.

All of the wheels in the first set of wheels for traveling in the first X-direction are shown. The first set of wheels features a first wheel 504 and a second wheel 502 arranged for engagement with two neighboring tracks of the first set of parallel rails 110 in the first direction X of the rail system 108. Thus, the first wheel 504 and the second wheel 502 are arranged on opposite sides of the body of the vehicle 501 and are rotatable around a common wheel axis WAX. The first set of wheels for traveling in the first X-direction further features a fifth wheel 504' arranged at the same side of the vehicle as the second wheel 504 for engaging the same track, and a sixth wheel 502' arranged at the same side as the second wheel 502 for engaging the same track.

Fig. 7b is an enlarged view of section A in Fig. 7a.

The first wheel 504 comprises a toothed circumferential surface 508 arranged radially inwards of a wheel rim of the first wheel 504. The surface 508 is arranged on an inner surface of the wheel rim pointing inwards towards the wheel axis WAX.

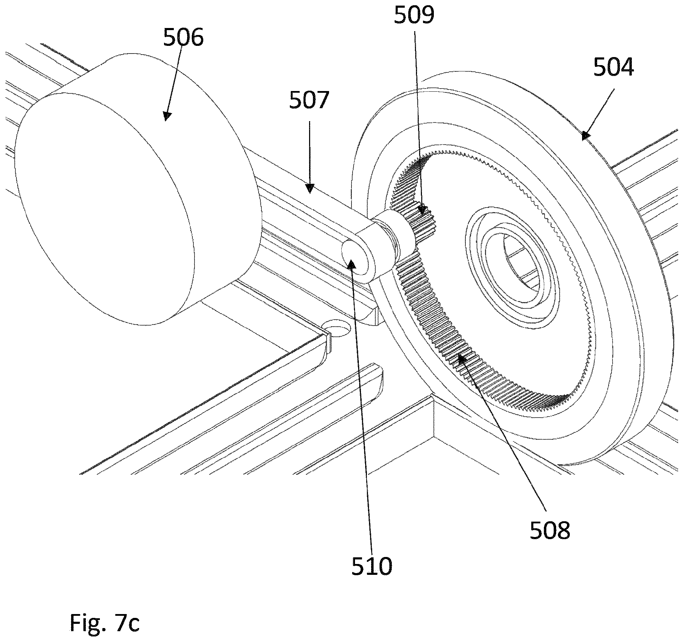

Fig. 7c is a perspective view of section A in fig. 7a where a bracket 505 to which a gear wheel 510 and wheel 504 are connected has been removed to better illustrate an engagement between the gear wheel 510 and the wheel 504.

The container handling vehicle 501 also features a first gear wheel 510 engaging the toothed surface 508 of the first wheel 504 via a first portion of the gear wheel 510 having a toothed outer surface 509. The first gear wheel 510 is rotatable around a gear wheel axis PAX.

As shown in the Figure 7b, the wheel axis WAX and the gear wheel axis PAX are arranged parallel and offset at least horizontally relative to each other. The WAX and the PAX are displayed as being offset horizontally in this embodiment; however, they can be offset both horizontally and vertically.

The first wheel 504 is connected to a bracket 505. The bracket 505 has a connecting end connectable to the vehicle body 501 and comprises a central web that extends with a surface flush with a side of the container handling vehicle 501. The central web supports the first wheel 504 and a gear wheel 508.

The gear wheel 508 comprises a second portion having a pulley for engagement with the first drive belt 507. The pulley is arranged on an opposite end of the gear wheel 510 relative the toothed outer surface 509 which is in contact with the circular surface 508 of the wheel 504. The pulley is arranged outside of the wheel rim; thus, the pulley is laterally displaced in the Y direction and not radially inwards of the wheel rim of the first wheel 504.

The first drive belt 507 connects an output shaft of the first wheel motor 506 and the pulley and is configured to drive the first gear wheel 510 by rotation of the first wheel motor 506. The output shaft rotates around a motor axis MAX. The motor axis MAX is parallel to the wheel axis WAX and the gear wheel axis PAX.

Similarly, a second drive belt connects an output shaft of the second wheel motor and the pulley and is configured to drive the second gear wheel by rotation of the second wheel motor.

The first wheel 504, the first gear wheel 510, the first drive belt 507, the first bracket 505 and the first wheel motor 506 form part of a first wheel assembly.

Similarly, a second wheel 502, a second gear wheel, a second drive belt, a second bracket and a second wheel motor form part of a second wheel assembly.

It shall be noted that the second set of wheels has been omitted from Figs. 7a-7c on purpose in order to better illustrate the other components. However it can be seen that by virtue of the wheel mounting arrangement the axis WAX is displaced by a distance 700 in the X direction beyond the plane of the Y-direction wheels 602. Furthermore, although not disclosed in Figs. 7a-7c, the container handling vehicle 501 also features a wheel lift mechanism for lifting the first set of wheels and/or the second set of wheels to change which of the first and second sets of wheels is in contact with the rail system 108 at any given time.

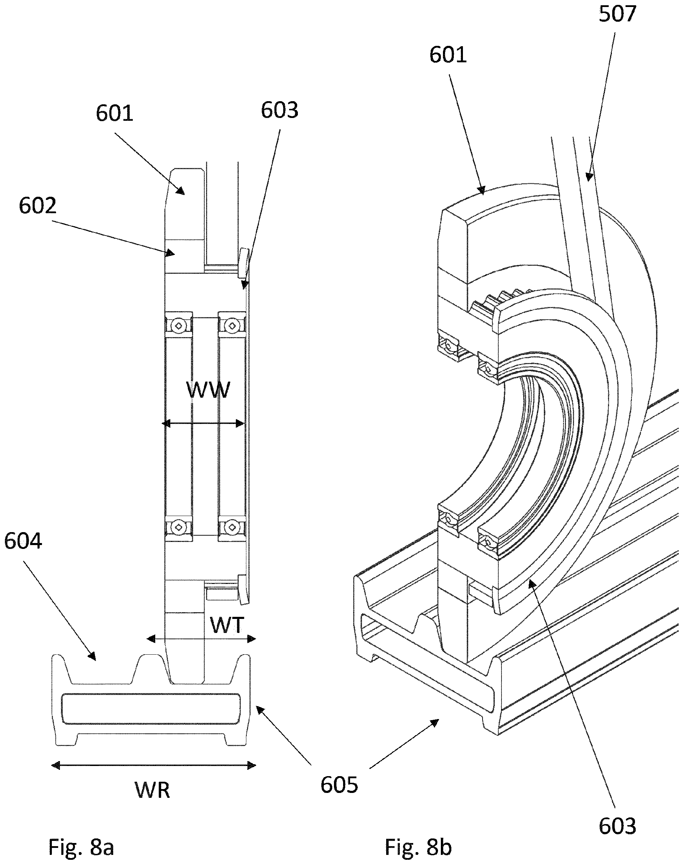

Fig. 8a-c is an example of an alternative solution to the drive mechanism of the front wheels in the X-direction.

Fig 8a is a cross sectional front view of a wheel for traveling in the first X-direction wherein the wheel is narrower than the track in order to make room for the drive mechanism on the inner side of the wheel without it being in the way for the lifting mechanism. The wheel setup is comprised of a tire, a wheel rim, and a sheave.

The tire can be made of a any material that gives a good grip with the surface of the track, like e.g. rubber.

The tire is attached to a wheel rim. The wheel rim connects the tire to the sheave. The sheave has an outer surface that is divided into two, a first part is attached to the wheel rim, while the second part is comprised of a toothed outer surface. The toothed outer surface interacts with the drive belt that transfers power from the wheel motor to the wheels. On the inner surface of the sheave there is placed a set of bearings. These bearings will allow the wheel to rotate around the wheel axis. The width of the sheave is the same as the width of the wheel (WW)

As it can be seen, the tire of the wheel is narrower than the width of the track (WT), and the width of the track is half the width of the rails (WR).

Fig. 8b is a perspective side view of the wheel in the fig. 8a.

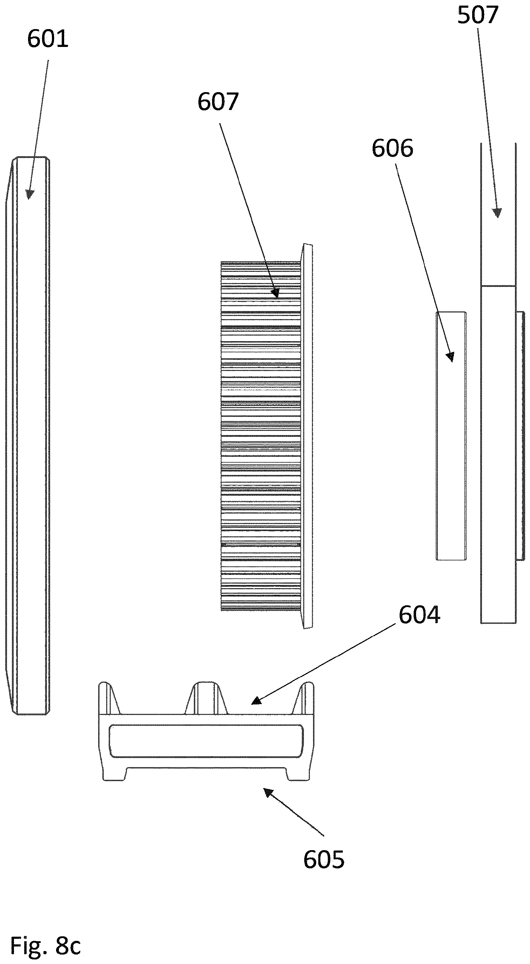

Fig. 8c is an exploded view of the wheel according to fig. 8a and 8b.

In the preceding description, various aspects of the delivery vehicle and the automated storage and retrieval system according to the invention have been described with reference to the illustrative embodiment. For purposes of explanation, specific numbers, systems and configurations were set forth in order to provide a thorough understanding of the system and its workings. However, this description is not intended to be construed in a limiting sense. Various modifications and variations of the illustrative embodiment, as well as other embodiments of the system, which are apparent to persons skilled in the art to which the disclosed subject matter pertains, are deemed to lie within the scope of the present invention.

Examples of the present disclosure are set out in the following numbered clauses.
1. A container handling vehicle for operating on a rail system of a storage and retrieval system, wherein the container handling vehicle comprises:
   a vehicle body;
   at first set of wheels connected to the vehicle body, the first set of wheels being configured for driving the container handling vehicle in a first direction (X) on top of the rail system, the first set of wheels comprising a first wheel (504) and a second wheel (502);
   a second set of wheels connected to the vehicle body, the second set of wheels being configured for driving the container handling vehicle in a second direction (Y) on top of the rail system, the second set of wheels comprising a third wheel (503) and a fourth wheel;
   a cantilever extending horizontally forward in the first direction (X) from the vehicle body; and
   a container lifting device arranged below the cantilever,
   wherein the third wheel (503) and the forth wheel are arranged on a first side of the vehicle body, the first side being the side of the vehicle body from which the cantilever extends, and are rotatable around two parallel and horizontally offset wheel axes (WAY), and wherein a vertical plane defined by the second set of wheels is a vertical plane in which external faces of the third wheel (503) and the forth wheel lie,
   wherein the first wheel (504) and the second wheel (502) are arranged on second and third sides of the vehicle body, the second and third sides being opposite sides of the vehicle body, each perpendicular to the first side, and wherein the first wheel (504) and the second wheel (502) are rotatable around a common wheel axis (WAX);
   wherein the container handling vehicle comprises a first bracket (505), extending from the vehicle body in the first direction (X), for supporting the first wheel (504), and a second bracket (505), extending from the vehicle body in the first direction (X), for supporting the second wheel (502),
   and wherein the first and second brackets (505) are configured to position the first and second wheels (504, 502) such that the mutual wheel axis (WAX) is positioned further forward in the first direction (X) than the vertical plane defined by the second set of wheels.
2. The container handling vehicle according to clause 1, wherein the first and second brackets (505) are arranged within a footprint of the cantilever, defined by a vertical projection of the cantilever.
3. The container handling vehicle according to any of the preceding clauses - comprising a first sheave (510) for driving the first wheel (504) and a second sheave (510) for driving the second wheel (502), wherein the first sheave (510) and the second sheave (510) are rotatable around a common sheave axis (PAX).
4. The container handling vehicle according to clause 3 wherein the wheel axis (WAX) and the sheave axis (PAX) are arranged parallel and offset relative to each other.
5. The container handling vehicle according to clause 3 or 4, wherein the first sheave is configured to drive a first toothed wheel which is configured to drive the first wheel, and the second sheave is configured to drive a second toothed wheel which is configured to drive the second wheel.
6. The container handling vehicle according to clause 5 wherein the first wheel (504) comprises a toothed inner circumferential surface (508) for engaging with the first toothed wheel (509) and the second wheel (502) comprises a toothed inner circumferential surface (508) for engaging with the second toothed wheel (510).
7. The container handling vehicle according to any of clauses 3 to 7, wherein the container handling vehicle comprises:
   - a first wheel motor (506) and a first drive belt (507), wherein the first drive belt (507) is configured to transfer drive from the first wheel motor (506) to the first sheave (510), and
   - a second wheel motor (506) and a second drive belt (507), wherein the second drive belt (507) is configured transfer drive from the second wheel motor (506) to the second sheave (510).
8. The container handling vehicle according to clause 8, wherein the first and second wheel motors (506) have a common motor rotational axis (MAX), and wherein the motor rotational axis (MAX) is arranged parallel and offset relative to the wheel axis (WAX) and the sheave axis (PAX).
9. The container handling vehicle (501) according clause 8, wherein the motor rotational axis (MAX) is arranged inside the vehicle body (501a).
10. The container handling vehicle according to clause 1 wherein the first wheel (502) is attached to a first sheave and the second wheel (502) is attached to a second sheave, and the first wheel (504) and the second wheel (502) and the first sheave and the second sheave all have the same common axis (WAX, PAX).
11. The container handling vehicle according to clause 11, wherein the container handling vehicle comprises:
   - a first wheel motor (506) and a first drive belt (507), wherein the first drive belt (507) is configured to transfer drive from the first wheel motor (506) to the first sheave (603), and
   - a second wheel motor (506) and a second drive belt (507), wherein the second drive belt (507) is configured to transfer drive from the second wheel motor (506) to the second sheave (603).
12. The container handling vehicle according to clause 1, wherein the container handling vehicle operates on a storage and retrieval system comprising a rail system being part of a framework structure where the rail system comprises a first set of parallel rails arranged to guide movement of container handling vehicles in a first direction (X) across the top of the framework structure, and a second set of parallel rails arranged perpendicular to the first set of rails to guide movement of the container handling vehicle in a second direction (Y) which is perpendicular to the first direction (X), the first and second sets of parallel rails dividing the rail system into a plurality of grid cells, the framework structure comprising upright members that define storage columns for storing containers within the framework structure.
13. The container handling vehicle according to clause 12 wherein the combined width (WW) of the first wheel (504) and the first sheave is equal to or smaller than half the width of a rail (WR) (605) of the rail system.
14. The container handling vehicle according to clause 12 wherein the combined width (WW) of the second wheel (502) and the second sheave is equal to or smaller than half the width of a rail (WR) (605) of the rail system.
15. The container handling vehicle according to any preceding clause,
   wherein each of the first and the second wheels (504, 502) comprises a wheel rim (602) and a tyre (601) arranged or moulded on the wheel rim.
16. The container handling vehicle according to clause 15, wherein the wheel rim (602) and the sheave (603) are portions of a single integral part.
17. The container handling vehicle according to clause 16, wherein the single wheel component is mounted on a wheel hub of the container handling vehicle via a pair of bearing rings (606).

### LIST OF REFERENCE NUMBERS

Prior art (figs 1-4):
- 1: Prior art automated storage and retrieval system
- 100: Framework structure
- 102: Upright members of framework structure
- 104: Storage grid
- 105: Storage column
- 106: Storage container
- 106': Particular position of storage container
- 107: Stack
- 108: Rail system
- 110: Parallel rails in first direction (X)
- 112: Access opening
- 119: First port column
- 120: Second port column
- 201: Prior art container handling vehicle
- 201a: Vehicle body of the container handling vehicle 201
- 201b: Drive means / wheel arrangement / first set of wheels in first direction (*X*)
- 201c: Drive means / wheel arrangement / second set of wheels in second direction (*Y*)
- 301: Prior art cantilever container handling vehicle
- 301a: Vehicle body of the container handling vehicle 301
- 301b: Drive means / first set of wheels in first direction (*X*)
- 301c: Drive means / second set of wheels in second direction (*Y*)
- 304: Gripping device
- 401: Prior art container handling vehicle
- 401a: Vehicle body of the container handling vehicle 401
- 401b: Drive means / first set of wheels in first direction (*X*)
- 401c: Drive means / second set of wheels in second direction (*Y*)
- 404: Gripping device
- 404a: Lifting band
- 404b: Gripper
- 404c: Guide pin
- 404d: Lifting frame
- 500: Control system
- 501: Container handling vehicle according to present invention
- 502: Second Wheel
- 503: Third Wheel
- 504: First Wheel
- 505: Bracket
- 506: Motor
- 507: Belt
- 508: Toothed Inner circumferential surface
- 509: Inner Rim of Wheel in X - Direction
- 510: Toothed Sheave
- 601: Tire
- 602: Wheel Rim
- 603: Sheave
- 604: Track
- 605: Rail
- 606: Bearing rings
- 607: Teeth on Sheave for interacting with the Belt
- WAX: Wheel axis X - Direction
- WAY: Wheel axis Y - Direction
- MAX: Motor axis X - Direction
- PAX: Pulley axis X - Direction
- WW: Width Wheel
- WT: Width Track
- WR: Width Rail
- *X*: First direction
- *Y*: Second direction
- *Z*: Third direction

## Claims

1. A container handling vehicle for operating on a rail system of a storage and retrieval system, wherein the container handling vehicle comprises:
a vehicle body;
a first set of wheels connected to the vehicle body, the first set of wheels being configured for driving the container handling vehicle in a first direction (X) on top of the rail system, the first set of wheels comprising a first wheel (504) and a second wheel (502);
a second set of wheels connected to the vehicle body, the second set of wheels being configured for driving the container handling vehicle in a second direction (Y) on top of the rail system, the second set of wheels comprising a third wheel (503) and a fourth wheel; and
a cantilever extending horizontally forward in the first direction (X) from the vehicle body;
wherein the third wheel (503) and the forth wheel are arranged on a first side of the vehicle body, the first side being the side of the vehicle body from which the cantilever extends, and are rotatable around two parallel and horizontally offset wheel axes (WAY), and wherein a vertical plane (602) defined by the second set of wheels is a vertical plane in which external faces of the third wheel (503) and the fourth wheel lie,
wherein the first wheel (504) and the second wheel (502) are arranged on second and third sides of the vehicle body, the second and third sides being opposite sides of the vehicle body, each perpendicular to the first side, and wherein the first wheel (504) and the second wheel (502) are rotatable around a common wheel axis (WAX) positioned further forward in the first direction (X) than the vertical plane defined by the second set of wheels.

2. The container handling vehicle according to claim 1, further comprising a container lifting device arranged below the cantilever, and/or wherein the container handling vehicle comprises a first bracket (505), extending from the vehicle body in the first direction (X), for supporting the first wheel (504), and a second bracket (505), extending from the vehicle body in the first direction (X), for supporting the second wheel (502), and wherein the first and second brackets (505) are configured to position the first and second wheels (504, 502) such that the mutual wheel axis (WAX) is positioned further forward in the first direction (X) than the vertical plane defined by the second set of wheels.

3. The container handling vehicle according to claim 1 or 2, wherein the first and second brackets (505) are arranged within a footprint of the cantilever, defined by a vertical projection of the cantilever.

4. The container handling vehicle according to any of the preceding claims comprising a first sheave or gear (510) for driving the first wheel (504) and a second sheave or gear (510) for driving the second wheel (502), wherein the first sheave (510) and the second sheave (510) are rotatable around a common sheave axis (PAX).

5. The container handling vehicle according to claim 3 or 4 wherein the wheel axis (WAX) and the sheave axis (PAX) are arranged parallel and offset relative to each other, optionally wherein the first sheave is configured to drive a first toothed wheel which is configured to drive the first wheel, and the second sheave is configured to drive a second toothed wheel which is configured to drive the second wheel, optionally wherein the first wheel (504) comprises a toothed inner circumferential surface (508) for engaging with the first toothed wheel (509) and the second wheel (502) comprises a toothed inner circumferential surface (508) for engaging with the second toothed wheel (510).

6. The container handling vehicle according to claim 4 or claim 5, wherein the container handling vehicle comprises:
- a first wheel motor (506) and a first drive belt (507), wherein the first drive belt (507) is configured to transfer drive from the first wheel motor (506) to the first sheave (510), and
- a second wheel motor (506) and a second drive belt (507), wherein the second drive belt (507) is configured transfer drive from the second wheel motor (506) to the second sheave (510). optionally wherein the first and second wheel motors (506) have a common motor rotational axis (MAX), and wherein the motor rotational axis (MAX) is arranged parallel and offset relative to the wheel axis (WAX) and the sheave axis (PAX) or wherein the motor rotational axis (MAX) is arranged inside the vehicle body (501a).

7. The container handling vehicle according to any preceding claim wherein the first wheel (502) is attached to a first sheave or gear and the second wheel (502) is attached to a second sheave or gear, and the first wheel (504) and the second wheel (502) and the first sheave and the second sheave all have the same common axis (WAX, PAX), optionally wherein the container handling vehicle comprises:
- a first wheel motor (506) and a first drive belt (507), wherein the first drive belt (507) is configured to transfer drive from the first wheel motor (506) to the first sheave (603), and
- a second wheel motor (506) and a second drive belt (507), wherein the second drive belt (507) is configured to transfer drive from the second wheel motor (506) to the second sheave (603).

8. A storage and retrieval system including the container handling vehicle according to any preceding claim, wherein the storage and retrieval system comprises a rail system being part of a framework structure where the rail system comprises a first set of parallel rails arranged to guide movement of container handling vehicles in a first direction (X) across the top of the framework structure, and a second set of parallel rails arranged perpendicular to the first set of rails to guide movement of the container handling vehicle in a second direction (Y) which is perpendicular to the first direction (X), the first and second sets of parallel rails dividing the rail system into a plurality of grid cells, the framework structure comprising upright members that define storage columns for storing containers within the framework structure.

9. The system according to claim 8 wherein the combined width (WW) of the first wheel (504) and the first sheave is equal to or smaller than half the width of a rail (WR) (605) of the rail system, or
wherein the combined width (WW) of the second wheel (502) and the second sheave is equal to or smaller than half the width of a rail (WR) (605) of the rail system.

10. The container handling vehicle according to any of claims 1 to 7, wherein each of the first and the second wheels (504, 502) comprises a wheel rim (602) and a tyre (601) arranged or moulded on the wheel rim, optionally wherein the wheel rim (602) and the sheave (603) are portions of a single integral part, optionally wherein the single wheel component is mounted on a wheel hub of the container handling vehicle via a pair of bearing rings (606).
